Europäisches Patentamt

European Patent Office

Office européen des brevets

(19)

(11) Veröffentlichungsnummer : **0 112 985**
**B1**

(12) **EUROPÄISCHE PATENTSCHRIFT**

(45) Veröffentlichungstag der Patentschrift :
07.09.88

(21) Anmeldenummer : 83110058.1

(22) Anmeldetag : 08.10.83

(51) Int. Cl.⁴ : **G 01 B  3/00**, G 01 B  5/02,
**G 01 B  7/02**

(54) Vorrichtung zur Messung von Vorschubbewegungen.

(30) Priorität : 02.12.82 DE 3244616

(43) Veröffentlichungstag der Anmeldung :
11.07.84 Patentblatt 84/28

(45) Bekanntmachung des Hinweises auf die Patenterteilung : 07.09.88 Patentblatt 88/36

(84) Benannte Vertragsstaaten :
AT CH DE FR GB IT LI NL SE

(56) Entgegenhaltungen :
EP-A- 0 040 684
DE-A- 2 631 233
DE-A- 2 712 421
DE-A- 3 113 962

(73) Patentinhaber : **Dr. Johannes Heidenhain GmbH**
**Nansenstrasse 17**
**D-8225 Traunreut (DE)**

(72) Erfinder : **Ernst, Alfons, Dipl.-Ing.**
**Traunring 62**
**D-8225 Traunreut (DE)**
Erfinder : **Spies, Alfons, Dipl.-Ing.**
**Wopfnerstrasse 2**
**D-8221 Seebruck (DE)**

### Beschreibung

Die Erfindung bezieht sich auf eine Vorrichtung zur Messung von Vorschubbewegungen nach dem Oberbegriff des Anspruches 1.

Es sind Wegmeßeinrichtungen bekannt, die als Längenmeßeinrichtungen konzipiert sind, und die einen inkremental geteilten Maßstab aufweisen, der in ein extrudiertes Aluminiumgehäuse eingeschoben ist (DE-A1-2 712 421). Die Abtasteinrichtung zum Ablesen des Maßstabes befindet sich dabei in dem Aluminiumprofil und weist einen Mitnehmer mit dem Querschnitt eines zweischneidigen Schwertes auf, der durch einen Längsschlitz im Aluminiumgehäuse herausgeführt wird, damit dessen freies Ende an einem der Maschinen-Bauteile, deren Relativbewegung gemessen werden soll, befestigt werden kann.

Längenmeßeinrichtungen mit annähernd gleichem Aufbau sind auch noch aus der DE-A1-2 631 233, der DE-A1-3 113 962 und der EP-A1-0 040 684 bekannt. Bei diesen Vorrichtungen befindet sich jeweils eine Maßverkörperung im Innern des Gehäuses und wird jeweils von einer ebenfalls im Innern befindlichen Abtasteinrichtung abgetastet. Die Abtasteinrichtung ist über Mitnehmer, die in den Außenbereich ragen, an einem der Maschinen-Bauteile befestigt. In allen Fällen wird die Abtasteinrichtung von einem Maschinen-Bauteil bewegt, das sich außerhalb des Gehäuses der Meßeinrichtung befindet.

Die zu messenden Maschinen-Bauteile können das Bett und der Schlitten einer Werkzeugmaschine sein. Ferner können Vorschubbewegungen von Maschinen-Bauteilen gemessen werden, die beispielsweise durch Kolbenbewegungen hervorgerufen werden. Sind in diesem Fall kolbenstangenlose Druckluftzylinder für den Maschinenvorschub eingesetzt, so kann die Lageveränderung des Kolbens innerhalb des Zylinders gemessen werden. Bei der Verwendung einer Meßeinrichtung der vorbeschriebenen Art zur Messung der Vorschubbewegung eines kolbenstangenlosen Kolbens in einem Druckluftzylinder verdoppelt sich nahezu die Baugröße der Gesamteinrichtung.

Der Erfindung liegt die Aufgabe zugrunde, eine Vorrichtung zur Messung von Vorschubbewegungen zu schaffen, die einfach und kostengünstig herstellbar ist, die robust ist und die möglichst geringe Abmessungen aufweist.

Erfindungsgemäß wird diese Aufgabe durch die Merkmale des Anspruches 1 gelöst.

Durch die Merkmale der abhängigen Ansprüche wird die Erfindung ausgestaltet.

Die besonderen Vorteile liegen in der Integration der Meßeinrichtung in die Vorschubeinrichtung.

Mit Hilfe von Ausführungsbeispielen soll die Erfindung anhand der Zeichnungen erläutert werden.

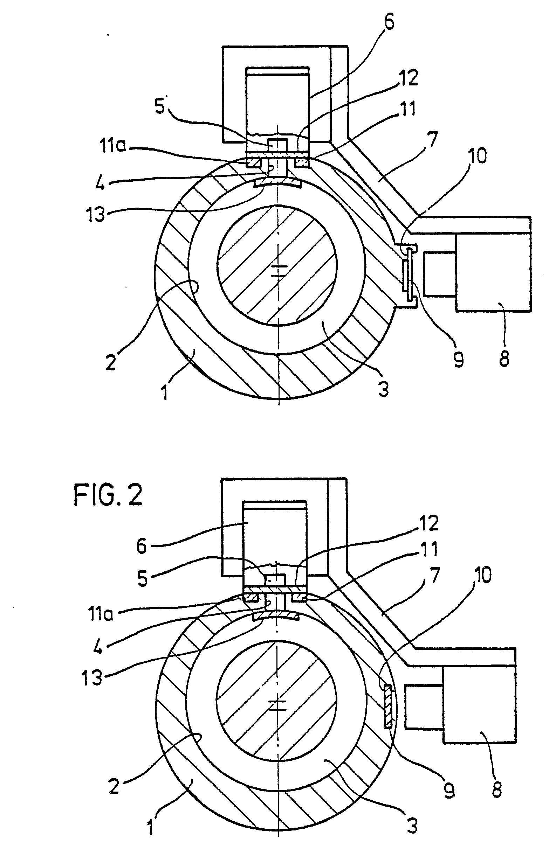

Es zeigen : Figur 1 den schematischen Querschnitt einer Vorrichtung mit außenliegendem Maßstab,

Figur 2 den schematischen Querschnitt einer Vorrichtung mit gekapseltem Maßstab,

Figur 3 den schematischen Querschnitt einer Vorrichtung mit innenliegendem Abtastkopf,

Figur 4 den schematischen Querschnitt einer Vorrichtung mit streifenförmigem Maßstab,

Figur 5 die schematische Längsansicht einer Vorrichtung, teilweise geschnitten.

Ein aus extrudiertem Leichtmetall bestehendes Hohlprofil 1 weist einen zylindrischen Innenraum 2 auf, in dem ein Kolben 3 translatorisch bewegbar ist. Durch einen Längsschlitz 4 greift ein Übertragungsorgan 5 nach außen und endet in einer Halterung 6. An dieser Halterung 6 kann in beliebiger Weise ein nicht dargestelltes Objekt befestigt sein, das mittels Kolbenantrieb translatorisch bewegt werden soll. Die Halterung 6 trägt ferner einen Haltewinkel 7, an dessen freiem Ende eine Abtasteinrichtung 8 befestigt ist. Die Abtasteinrichtung 8 tastet einen Maßstab 9 ab, der in eine Nut 10 des Hohlprofils 1 eingeschoben und in geeigneter Weise fixiert ist. Das Funktionsprinzip der Meßeinrichtung kann optisch, optoelektronisch, magnetisch, kapazitiv oder induktiv sein.

Wenn das Funktionsprinzip nicht optisch oder optoelektronisch ist, so kann man den Maßstab vor Beschädigungen schützen, indem man ihn innerhalb der Gehäusewandung unterbringt.

Eine derartige Lösung ist in Figur 2 dargestellt. Die die Maßverkörperung 9 aufnehmende Nut 10 ist als Hohlraum beim Herstellen des Hohlprofiles in verhältnismäßig einfacher Weise durch Strangpressen entstanden. Für diese geschützte Maßverkörperung 9 ist ein magnetisches Meßsystem sehr gut geeignet, da das Profil aus nicht magnetischem Material gefertigt ist (Aluminium oder armierter Kunststoff).

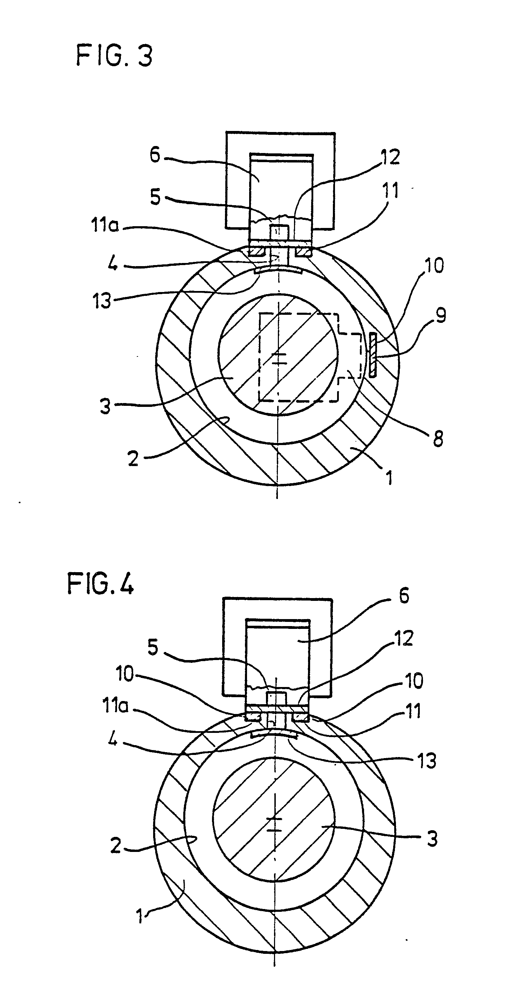

Bei einer weiteren Variante gemäß Figur 3 ist die Baugröße der Vorrichtung noch weiter verringert. Die Abtasteinrichtung 8 ist in den Kolben integriert und die Maßverkörperung 9 ist in der Wandung des Hohlprofils 1 in der Nähe des zylindrischen Innenraumes 2 in einer Nut 10 angeordnet. Die erforderlichen Kabelverbindungen sind jeweils durch das Übertragungsorgan 5 nach außen geführt. Da dies eine ähnliche Maßnahme ist, wie auch bei bekannten gekapselten Meßeinrichtungen, ist die Kabelführung nicht gezeigt.

Mit der Ausführung gemäß Figur 3 wird eine Baugröße erzielt, die nicht über die Baugröße des ursprünglichen Druckluftzylinders hinausgeht, obwohl eine Meßeinrichtung integriert ist.

Die Integration ist bei der Ausführungsform nach Figur 4 noch fortgesetzt. Alle bisher gezeigten Lösungen weisen beiderseits des Längsschlitzes 4 Magnetstreifen 11, 11a auf, die eine ferromagnetische Dichtung 12 halten, und so den Längsschlitz 4 verschließen. Im Bereich des Kolbens 3 wird diese Dichtung 12 von den Magnetstreifen 11, 11a abgehoben und durch die Halterung 6 geführt. Eine derartige Stahlbandabdeckung ist auch in der schwedischen Auslegeschrift 338 717 gezeigt.

In der Ausführungsform gemäß Figur 4 ist einer der Magnetstreifen 11 mit einer magnetischen Meßteilung versehen und der zweite Magnetstreifen 11a trägt magnetische Referenzmarken. Die Referenzmarken dienen Steuerzwecken und sind unter anderem auch in der DE-OS-18 14 785 beschrieben. Die Abtastung erfolgt durch nicht näher bezeichnete Aufnehmer, die entweder in der Halterung 6 angeordnet sind und die Teilung und die Referenzmarken von außen abtasten, oder aber der Kolben 3 ist mit Aufnehmern versehen, so daß die Abtastung von innen erfolgt.

Die Magnetstreifen 11, 11a haben also eine Doppelfunktion : Sie stellen die Maßverkörperung dar und halten das Dichtungsband 12 auf dem Längsschlitz 4.

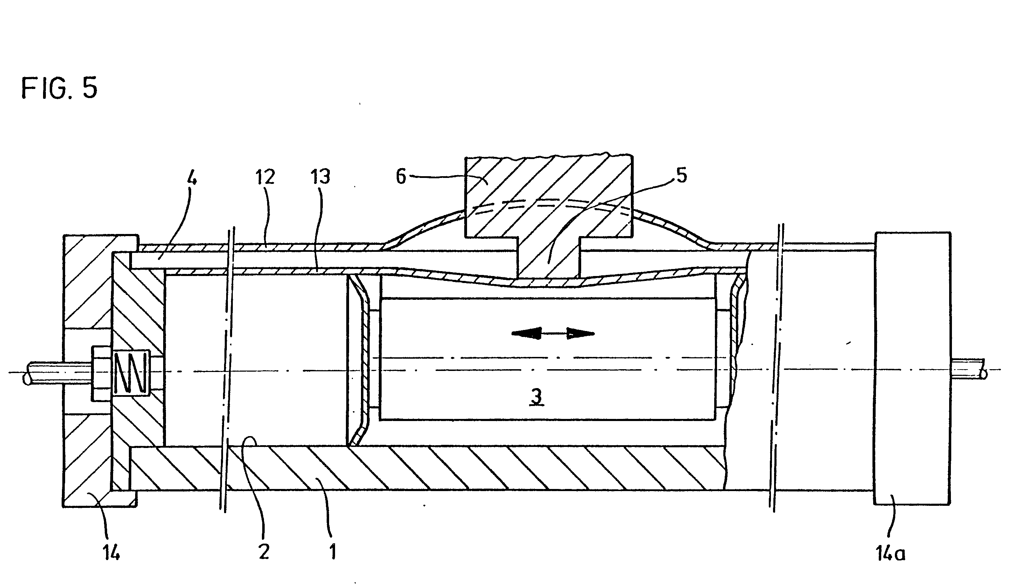

Die Figur 5 zeigt eine erfindungsgemäße Vorrichtung im Teil-Längsschnitt. Die Stirnseiten sind mit Endstücken 14 und 14a verschlossen, durch die wechselweise — je nach gewünschter Vorschubrichtung — Druckluft oder ein anderes Fluid in den Hohlkörper eingepreßt wird. Zur Verbesserung der Abdichtung am Schlitz 4 ist noch eine weitere Dichtung 13 vorgesehen, die durch das unter Druck stehende Fluid von innen gegen den Längsschlitz 4 gedrückt wird.

Durch die erfindungsgemäße Integration wird eine besonders vorteilhafte Vorrichtung geschaffen, die nicht auf die Ausführungsbeispiele beschränkt sein soll, sondern die im Rahmen der Erfindung noch weiter ausgestaltet werden kann. So muß der Innenraum keineswegs zylindrisch sein, auch andere Querschnitte des Hohlprofils sind vorstellbar. Die Nut für die Maßverkörperung muß auch nicht zwingend beim Strangpressen mit ausgeformt werden, sie ließe sich auch durch Fräsen in das Hohlprofil einbringen. Es ist ebenso vorstellbar, den Maßstabträgerkörper aus Einzelelementen zusammenzustellen. Das Hohlprofil 1 könnte auch gekrümmt sein. Ebenso ist es vorstellbar, daß das Dichtungsband 12 Teilungsträger ist, oder daß das Hohlprofil 1 so gestaltet ist, daß die Teilung unmittelbar auf dem Hohlprofil 1 aufgebracht ist.

Im Rahmen des Könnens eines Fachmannes sind noch weitere Ausgestaltungsmöglichkeiten vorstellbar.

**Patentansprüche**

1. Vorrichtung zur Messung von Vorschubbewegungen mit einem Trägerkörper (1) für wenigstens eine Meßteilung (9), einer Abtasteinrichtung (8) zum Ablesen der Meßteilung und einer Verschiebevorrichtung (3) zum Verschieben der Abtasteinrichtung (8) entlang der Meßteilung (9), wobei die Trägerkörperwand einen Schlitz (4) mit wenigstens einer Dichtung (12) zur Durchführung eines Übertragungsorganes (5) aufweist, dadurch gekennzeichnet, daß der Trägerkörper als Hohlkörper (1) und die Verschiebevorrichtung als Kolben (3) ausgebildet ist, der im Innern des Hohlkörpers (1) translatorisch mit Hilfe von Fluid bewegbar ist.

2. Vorrichtung nach Anspruch 1, dadurch gekennzeichnet, daß der Hohlkörper (1) durch ein im Innern als Zylinder (2) ausgebildetes extrudiertes Aluminiumprofil gebildet wird, welches in Längsrichtung wenigstens eine Nut (10) zur Aufnahme einer Maßverkörperung (9) aufweist.

3. Vorrichtung nach den Ansprüchen 1 und 2, dadurch gekennzeichnet, daß eine zweite Nut (10) zur Aufnahme einer zweiten Maßverkörperung (11a) mit einer Referenzmarkenteilung vorgesehen ist.

4. Vorrichtung nach Anspruch 2, dadurch gekennzeichnet, daß die Dichtung (12) ein magnetisierbares Band ist, das von beiderseits des Längsschlitzes (4) angeordneten Magnetstreifen (11, 11a) gehalten ist.

5. Vorrichtung nach den Ansprüchen 1 und 2, dadurch gekennzeichnet, daß die Maßverkörperung (9) ein Band mit magnetischer Meßteilung ist.

6. Vorrichtung nach den Ansprüchen 4 und 5, dadurch gekennzeichnet, daß einer der Magnetstreifen (11) eine magnetische Meßteilung aufweist und daß der zweite Magnetstreifen (11a) wenigstens eine magnetische Referenzmarke trägt.

7. Vorrichtung nach den Ansprüchen 1 und 2, dadurch gekennzeichnet, daß die Nut (10) für die Maßverkörperung (9) an der äußeren Oberfläche und die Abtasteinrichtung (8) außerhalb des Hohlkörpers (1) und an der Halterung (6) angeordnet ist.

8. Vorrichtung nach den Ansprüchen 1 und 2, dadurch gekennzeichnet, daß sich die Nut (10) innerhalb der Wandung des Hohlkörpers (1) befindet und die Abtasteinrichtung (8) mit der Halterung (6) außerhalb des Hohlkörpers (1) angeordnet ist.

9. Vorrichtung nach den Ansprüchen 1 und 2, dadurch gekennzeichnet, daß sich die Nut (10) innerhalb der Wandung des Hohlkörpers (1) befindet und die Abtasteinrichtung (8) im Kolben (3) innerhalb des Hohlkörpers (1) angeordnet ist.

10. Vorrichtung nach den Ansprüchen 1 und 2, dadurch gekennzeichnet, daß die Dichtung (12) Teilungsträger ist.

11. Vorrichtung nach Anspruch 1, dadurch gekennzeichnet, daß der Hohlkörper (1) aus mehreren Teilprofilen zusammengesetzt ist.

**Claims**

1. Device for measuring feed movements with a support body (1) for at least one measuring graduation (9), a sensing unit (8) for reading the measuring graduation and a displacement device (3) for displacing the sensing unit (8) along the measuring graduation (9), wherein the support body wall has a slot (4) with at least one seal (12) for the passage of a transmission organ (5), characterized in that the support body is formed as a hollow body (1) and the displacement device as a piston (3), which is movable in translation within the hollow body (1) with the aid of fluid.

2. Device according to claim 1, characterized in that the hollow body (1) is formed by an extruded aluminium section formed internally as a cylinder (2), which has at least one groove (10) in the longitudinal direction for the reception of a measuring entity (9).

3. Device according to claims 1 and 2, characterized in that a second groove (10) is provided for the reception of a second measuring entity (11a) with a reference mark graduation.

4. Device according to claim 2, characterized in that the seal (12) is a magnetisable strip, which is held by magnetic strips (11, 11a) arranged on both sides of the longitudinal slot (4).

5. Device according to claims 1 and 2, characterized in that the measuring entity (9) is a strip with magnetic measuring graduation.

6. Device according to claims 4 and 5, characterized in that one of the magnetic strips (11) has a magnetic measuring graduation and in that the second magnetic strip (11a) carries at least one magnetic reference mark.

7. Device according to claims 1 and 2, characterized in that the groove (10) for the measuring entity (9) is arranged on the outer surface of the hollow body (1), with the sensing unit (8) outside the hollow body and on the holder (6).

8. Device according to claims 1 and 2, characterized in that the groove (10) is inside the wall of the hollow body (1) and the sensing unit (8) is arranged with the holder (6) outside the hollow body (1).

9. Device according to claims 1 and 2, characterized in that the groove (10) is inside the hollow body (1) and the sensing unit (8) is arranged in the piston (3) inside the hollow body (1).

10. Device according to claims 1 and 2, characterized in that the seal (12) is graduation support.

11. Device according to claim 1, characterized in that the hollow body (1) is assembled from a plurality of part sections.

**Revendications**

1. Dispositif pour mesurer des mouvements d'avancement, comprenant un corps de support (1) pour au moins une graduation de mesure (9), un dispositif de balayage (8) pour la lecture de la graduation de mesure, et un dispositif de translation (3) pour le déplacement en translation du dispositif de balayage (8) le long de la graduation de mesure (9), la paroi du corps de support comportant une fente (4) avec au moins un joint (12) pour le passage d'un organe de transmission (5), caractérisé en ce que le corps de support est réalisé comme corps creux (1) et le dispositif de translation comme piston (3) qui est mobile en translation à l'intérieur du corps creux (1) à l'aide d'un fluide.

2. Dispositif selon la revendication 1, caractérisé en ce que le corps creux (1) est formé par un profilé d'aluminium extrudé, réalisé à l'intérieur comme cylindre (2), qui possède dans le sens longitudinal au moins une rainure (10) pour la réception d'une échelle de mesure (9).

3. Dispositif selon les revendications 1 et 2, caractérisé en ce qu'il est prévu une deuxième rainure (10) pour la réception d'une deuxième échelle de mesure (11a) avec une graduation de repères de référence.

4. Dispositif selon la revendication 2, caractérisé en ce que le joint (12) est une bande magnétisable qui est maintenue par des rubans magnétiques (11, 11a) disposés des deux côtés de la fente longitudinale (4).

5. Dispositif selon les revendications 1 et 2, caractérisé en ce que l'échelle de mesure (9) est une bande avec une graduation de mesure magnétique.

6. Dispositif selon les revendications 4 et 5, caractérisé en ce que l'un des rubans magnétiques (11) possède une graduation de mesure magnétique et que le deuxième ruban magnétique (11a) porte au moins un repère de référence magnétique.

7. Dispositif selon les revendications 1 et 2, caractérisé en ce que la rainure (10) pour l'échelle de mesure (9) est disposée sur la surface extérieure et le dispositif de balayage (8) à l'extérieur du corps creux (1) et sur le support (6).

8. Dispositif selon les revendications 1 et 2, caractérisé en ce que la rainure (10) se trouve à l'intérieur de la paroi du corps creux (1) et le dispositif de balayage (8) avec le support (6) est disposé à l'extérieur du corps creux (1).

9. Dispositif selon les revendications 1 et 2, caractérisé en ce que la rainure (10) se trouve à l'intérieur de la paroi du corps creux (1) et le dispositif de balayage (8) est disposé dans le piston (3) à l'intérieur du corps creux (1).

10. Dispositif selon les revendications 1 et 2, caractérisé en ce que le joint (12) est le support de graduation.

11. Dispositif selon la revendication 1, caractérisé en ce que le corps creux (1) est composé de plusieurs profilés partiels.

FIG. 2

FIG. 3

FIG.4

FIG. 5